Europäisches Patentamt

European Patent Office

Office européen des brevets

(19)

(11)  **EP 1 244 992 B1**

(12)  **FASCICULE DE BREVET EUROPEEN**

(45) Date de publication et mention
de la délivrance du brevet:
**23.07.2003  Bulletin 2003/30**

(21) Numéro de dépôt: **00985401.9**

(22) Date de dépôt: **05.12.2000**

(51) Int Cl.⁷: **G06F 19/00**, A63F 13/12

(86) Numéro de dépôt international:
**PCT/FR00/03382**

(87) Numéro de publication internationale:
**WO 01/045025 (21.06.2001 Gazette 2001/25)**

(54) **PROCEDE DE GESTION DE JEU A DISTANCE SECURISE**

GESICHERTES FERNSPIELVERWALTUNGSVERFAHREN

SECURE METHOD FOR REMOTE GAME MANAGEMENT

(84) Etats contractants désignés:
**DE ES FR GB IT**

(30) Priorité:  **17.12.1999  FR 9915950**

(43) Date de publication de la demande:
**02.10.2002  Bulletin 2002/40**

(73) Titulaire: **Thomson Licensing S.A.**
**92100 Boulogne-Billancourt (FR)**

(72) Inventeurs:
 • **LION, Stéphanie, c/o Thomson Multimédia**
**F-92648 Boulogne (FR)**

 • **TANG-TALPIN, Yan-Mei,**
**c/o Thomson Multimédia**
**F-92648 Boulogne (FR)**

(74) Mandataire: **Berthier, Karine**
**Thomson multimedia**
**European Patent Operations**
**46 Quai A. Le Gallo**
**92648 Boulogne Cédex (FR)**

(56) Documents cités:
**EP-A- 0 552 822          WO-A-97/19537**
**WO-A-98/40140          US-A- 5 643 086**
**US-A- 5 850 447**

**Description**

Domaine de l'invention

La présente invention concerne un procédé de gestion de jeu à distance sécurisé entre un centre de gestion de jeu et des terminaux de jeu distants.

Etat de ta technique

Les organisateurs de jeux tirent de plus en plus partie de l'utilisation des réseaux ouverts, tel Intemet, ou des possibilités offertes par la télévision interactive pour organiser des jeux à distance.
Le document US-A-5 850 447 décrit notamment un système de participation à des jeux télévisés interactifs avec des moyens de vérification de la chronologie des évènements liés aux jeux.
Les principaux problèmes posés par les jeux à distance sont :

- pour l'organisateur du jeu, d'être sûrs de l'authenticité du ou des gagnants, et
- pour les joueurs, d'être sûrs que leurs réponses restent confidentielles jusqu'à la fin du jeu et de recevoir leur prix s'ils gagnent.

Les solutions proposées actuellement pour garantir la sécurité dans les jeux à distance consistent à ce que les joueurs s'enregistrent, avant de jouer, auprès de l'organisateur du jeu. Ils reçoivent dans ce cas un identifiant et un code secret associé qu'ils doivent ensuite utiliser à chaque fois qu'ils veulent jouer.
Le fait de devoir s'enregistrer avant de pouvoir jouer implique que le joueur ne peut pas jouer de manière impulsive. Un autre inconvénient de ce système est que l'anonymat du joueur n'est pas garanti puisqu'il joue toujours sous un identifiant.
Un but de la présente invention est de résoudre les problèmes précités en proposant un nouveau procédé de gestion de jeu à distance permettant aux joueurs de jouer de manière impulsive, sans phase d'enregistrement préalable, et anonyme, tout en garantissant la sécurité, tant du point de vue de l'organisateur du jeu que de celui du joueur.

Exposé de l'invention

A cet effet l'invention concerne, selon un premier aspect, un procédé de gestion de jeu à distance sécurisé entre un centre de gestion de jeu et au moins un terminal de jeu distant qui comporte les étapes suivantes mises en oeuvre par le terminal de jeu distant.
La première étape consiste à recevoir dudit centre de gestion de jeu un premier message contenant un identifiant de jeu ainsi qu'une question.
La seconde étape consiste à construire un message de réponse contenant l'identifiant de jeu et la réponse d'un joueur utilisant ledit terminal de jeu à ladite question ; la troisième étape consiste à masquer le message de réponse avec un secret ; et la quatrième étape consiste à transmettre le message de réponse masqué au centre de gestion de jeu.
La cinquième étape consiste à recevoir dudit centre de gestion de jeu un accusé de réception lorsque la réponse du joueur envoyée lors de la quatrième étape a été prise en compte par le centre de gestion de jeu.
Grâce au procédé de l'invention, le joueur peut jouer de manière impulsive puisqu'il n'a pas besoin d'être préenregistré auprès du centre de gestion de jeu. De plus, le fait d'envoyer sa réponse sous une forme masquée garantit son anonymat et en même temps la sécurité de la transmission de sa réponse.
Selon un premier mode de réalisation de l'invention, la troisième étape consiste à générer un nombre aléatoire secret ; à appliquer à ce nombre secret une fonction à sens unique pour générer un nombre de masquage public et à utiliser le nombre de masquage public pour masquer le message de réponse.
Selon un deuxième mode de réalisation de l'invention, la troisième étape consiste à chiffrer le message de réponse à l'aide d'une clé secrète symétrique générée par ledit terminal de jeu distant.
Selon un mode de réalisation particulier, le premier message envoyé lors de la première étape comprend en outre : un identifiant du centre de gestion de jeu; un certificat, délivré par une autorité de certification au centre de gestion de jeu, déchiffrable à l'aide d'une clé publique de l'autorité de certification, fournissant la clé publique du centre de gestion de jeu correspondant à l'identifiant dudit centre de gestion de jeu; et une signature d'une partie ou de la totalité dudit message à l'aide de la clé privée associée à la clé publique du centre de gestion de jeu.
Ceci permet avantageusement d'authentifier le centre de gestion de jeu et, en particulier, de s'assurer que la question posée provient bien d'un organisateur de jeu agréé par l'autorité de certification et n'a pas été altérée lors de la transmission par un pirate.

Selon un autre aspect de ce mode de réalisation particulier, chaque terminal de jeu distant contient la clé publique de l'autorité de certification et, lors de la deuxième étape, le terminal de jeu distant procède, avant de construire le message de réponse, à la vérification de l'authenticité du centre de gestion de jeu à l'aide de ladite clé publique de l'autorité de certification.

Selon un autre mode de réalisation particulier de l'invention, le message de réponse construit à la deuxième étape par le terminal de jeu distant contient en outre des données auxiliaires de personnalisation. Ceci peut comprendre le nom du joueur, son adresse, son numéro de téléphone, etc. Ces données sont bien sûr transmises sous forme cachée grâce au nombre public de masquage pour garantir l'anonymat du joueur et ne seront dévoilées que dans le cas où le joueur gagne et souhaite obtenir son prix.

Selon un autre mode de réalisation préféré de l'invention, le message de réponse masqué est transmis lors de la quatrième étape sous une forme chiffrée à l'aide de la clé publique du centre de gestion de jeu. Ceci offre un deuxième niveau de sécurité, en plus du masquage de la réponse.

Selon un autre mode de réalisation de l'invention, l'accusé de réception envoyé lors de la cinquième étape comporte une signature, à l'aide de la clé privée associée à la clé publique du centre de gestion de jeu, d'un message formé de la concaténation de l'identifiant de jeu et du message de réponse masqué envoyé par le terminal de jeu distant.

Selon un autre aspect de l'invention, le procédé comporte une étape supplémentaire suivante de réclamation du prix gagné par un joueur lorsque la réponse du joueur envoyée lors de la quatrième étape est la bonne réponse à la question contenue dans le premier message reçu lors de la première étape.

La sixième étape consiste, pour le terminal de jeu distant utilisé par le joueur gagnant, à envoyer au centre de gestion de jeu un message de réclamation du prix contenant au moins : l'accusé de réception reçu du centre de gestion de jeu à la cinquième étape ; et une information prouvant que ledit terminal de jeu est en possession du secret utilisé pour masquer le message de réponse à la troisième étape.

Si le message de réponse a été masqué lors de la troisième étape selon le premier mode de réalisation de l'invention, alors l'information transmise à la sixième étape comporte, dans une première variante, le nombre de masquage public et le nombre aléatoire secret générés à la troisième étape.

Dans une seconde variante, l'information transmise à la sixième étape comporte le nombre de masquage public et un moyen de prouver, via un protocole zéro-connaissance, que le terminal est en outre en possession du nombre aléatoire secret utilisé pour générer ledit nombre de masquage public.

Si le message de réponse a été masqué lors de la troisième étape selon le deuxième mode de réalisation de l'invention, alors l'information transmise à la sixième étape comporte la clé secrète symétrique.

L'invention concerne aussi un terminal de jeu distant capable de mettre en oeuvre au moins l'une des étapes un à six du procédé ci-dessus.

L'invention concerne également, selon un deuxième aspect, un procédé de gestion de jeu à distance sécurisé entre un centre de gestion de jeu et au moins un terminal de jeu distant qui comporte les étapes suivantes mises en oeuvre par le centre de gestion de jeu.

La première étape consiste à envoyer audit terminal de jeu distant un premier message contenant un identifiant de jeu ainsi qu'une question.

La seconde étape consiste à recevoir dudit terminal de jeu distant la réponse d'un joueur dans un message de réponse masqué avec un secret connu seulement du terminal de jeu distant.

La troisième étape consiste à vérifier que le message de réponse masqué est reçu à un instant antérieur à celui de la diffusion de la réponse à la question posée à première étape.

La quatrième étape consiste, en cas de vérification positive lors de la troisième étape, à envoyer un accusé de réception audit terminal de jeu distant.

La cinquième étape consiste à diffuser la réponse à la question posée à la première étape audit terminal de jeu distant.

Dans un mode de réalisation particulier de cet aspect l'invention, le centre de gestion de jeu est relié à tous les terminaux de jeu distants par une première voie de communication bi-directionnelle et par une deuxième voie de communication mono-directionnelle du centre de gestion vers les terminaux. Selon ce mode de réalisation, le premier message est envoyé lors de la première étape, par ladite voie de communication mono-directionnelle. Il peut s'agir par exemple d'une voie de diffusion hertzienne, par câble ou par satellite.

Selon un autre aspect de ce mode de réalisation, la diffusion de la réponse lors de la cinquième étape est effectuée par la voie de communication mono-directionnelle.

Selon un autre mode de réalisation particulier de ce deuxième aspect de l'invention, le procédé comporte des étapes supplémentaires, mises en oeuvre par le centre de gestion de jeu, de remise du prix à un joueur gagnant.

La sixième étape consiste à recevoir d'un terminal de jeu distant utilisé par le joueur gagnant un message de réclamation du prix contenant au moins : l'accusé de réception envoyé à la quatrième étape ; et une information prouvant que ledit terminal de jeu distant est en possession du secret utilisé pour masquer le message de réponse reçu à la deuxième étape.

La septième étape consiste à vérifier la validité de la réponse reçue dans ledit message de réclamation du prix.

La huitième étape consiste, en cas de vérification positive lors de la septième étape, à mettre en oeuvre des moyens pour remettre le prix au joueur gagnant.

L'invention concerne en outre un centre de gestion de jeu capable de mettre en oeuvre au moins l'une des étapes un à huit du procédé ci-dessus.

Brève description des dessins

D'autres caractéristiques et avantages de l'invention ressortiront de la description détaillée suivante, prise à titre d'exemple non limitatif, en référence aux dessins annexés dans lesquels :

- la figure 1 illustre un centre de gestion de jeu en liaison avec plusieurs terminaux de jeux distants selon un premier mode de réalisation de l'invention ;
- la figure 2 illustre un centre de gestion de jeu en liaison avec plusieurs terminaux de jeux distants selon un second mode de réalisation de l'invention ;
- la figure 3 illustre le procédé de gestion de jeu à distance selon l'invention ; et
- les figures 4 et 5 illustrent le contenu de messages qui sont utilisés dans le procédé de l'invention.

Description détaillée de modes de réalisation de l'invention

Le procédé de gestion de jeu à distance qui va être détaillé ci-dessous peut être mis en oeuvre dans différents types d'environnements. Il est plus particulièrement adapté aux applications de jeux sur Internet ou dans le cadre de la télévision interactive.

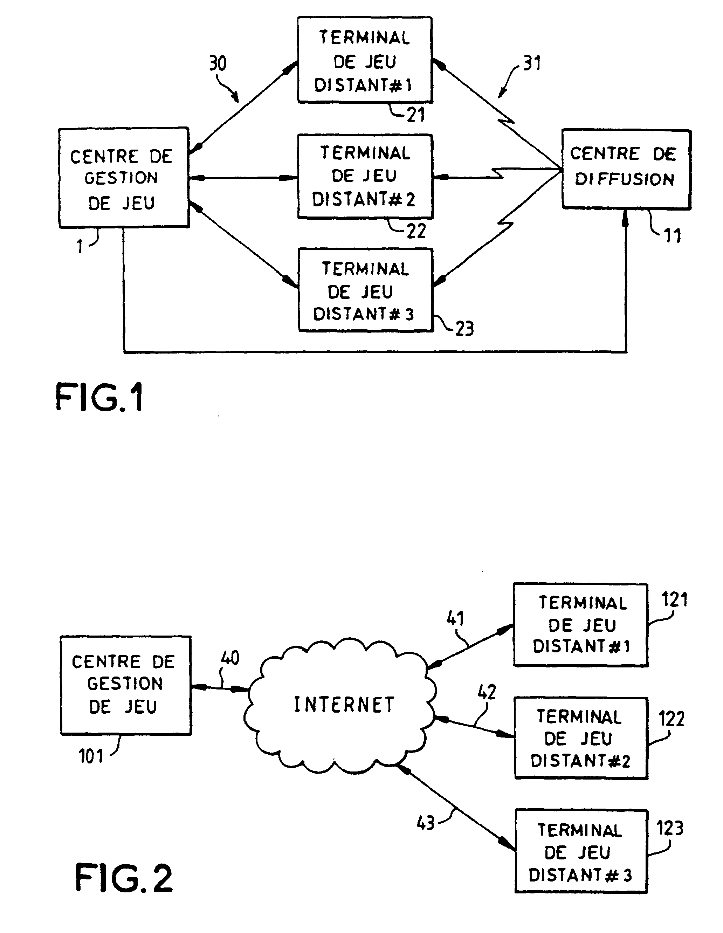

Sur la figure 1, on a représenté un premier exemple d'environnement adapté au procédé de l'invention. Le centre de gestion de jeu 1, localisé par exemple chez un organisateur de jeu, est un serveur dans lequel est exécutée une application de jeu. Il est relié à des terminaux de jeux distants 21, 22, 23 situés chez des utilisateurs à travers un premier réseau bi-directionnel 30.

Les terminaux de jeu distants peuvent être par exemple des récepteurs de télévision comportant un module muni d'un microprocesseur dans lequel est exécutée une application de jeu correspondant à celle exécutée dans le serveur 1. Il peut également s'agir de décodeurs de signaux télévisés numériques ou analogiques transmis par câble ou par satellite ou même de consoles de jeu. Les terminaux de jeu distants comportent une interface utilisateur constituée notamment d'un écran d'affichage permettant de visualiser des questions posées par l'organisateur du jeu, d'un clavier ou de tout autre moyen permettant de saisir une réponse à la question posée (notamment une télécommande).

Dans l'exemple de la figure 1, le centre de gestion de jeu 1 est associé à un centre de diffusion 11 qui communique avec les terminaux de jeu distants à travers un deuxième réseau mono directionnel 31.

Par exemple, dans le cas où l'organisateur du jeu est un distributeur de programmes télévisés, le centre de diffusion 11 est celui par lequel il diffuse déjà ses programmes. Le réseau mono directionnel 31 est par exemple un réseau de diffusion par voie hertzienne, par câble ou par satellite de signaux télévisés numériques ou analogiques. Il permet de transmettre des informations simultanément du centre de gestion de jeu 1 vers tous les terminaux de jeux distants 21, 22, 23 auxquels il est relié.

Le premier réseau bi-directionnel 30 est par exemple formé des lignes téléphoniques du Réseau Téléphonique Commuté ou bien de lignes numériques spécialisées à plus haut débit. Dans le cas où le procédé de jeu est mis en oeuvre dans le cadre de la télévision interactive, le réseau bi-directionnel 30 forme la voie de retour des programmes interactifs. Ce réseau 30 permet d'établir des communications individuelles dans les deux sens entre chaque terminal de jeu distant et le centre de gestion de jeu.

Dans un deuxième type d'environnement de mise en oeuvre du procédé de jeu selon l'invention, représenté à la figure 2, le centre de gestion de jeu 101 est relié au réseau Internet par l'intermédiaire d'une liaison bi-directionnelle 40 et chacun des terminaux de jeux distants 121, 122, 123 est également relié au réseau internet par une liaison bi-directionnelle 41, 42, 43.

Dans cet exemple d'application, les terminaux de jeu distants sont par exemple constitués d'ordinateurs personnels localisés chez des utilisateurs formant des joueurs potentiels.

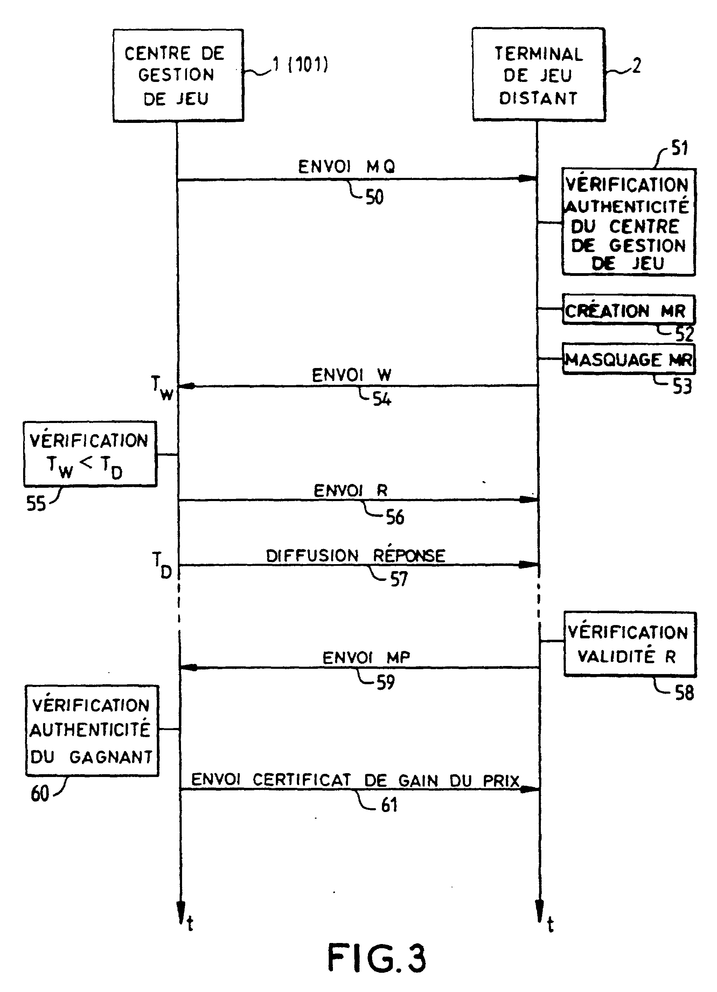

Nous allons maintenant décrire le procédé de gestion de jeu proprement dit en liaison avec les figures 3 à 5.

Le procédé de gestion de jeu de l'invention est particulièrement adapté aux jeux dans lesquels une question est posée aux joueurs en leur donnant un certain délai pour répondre. Il peut s'agir d'une question ayant un sens et exigeant des connaissances particulières pour y répondre. Dans le cas d'une loterie, la question peut proposer aux joueurs de parier sur un tirage futur aléatoire. Dans ce cas, la réponse attendue sera le résultat du tirage de la loterie.

Sur la figure 3 est illustré schématiquement le procédé de gestion de jeu selon l'invention entre un centre de gestion de jeu 1 ou 101 et un terminal de jeu distant donné 2 parmi tous ceux auxquels est relié le centre de gestion de jeu. On a représenté les différentes étapes du procédé de gestion de jeu le long d'un axe des temps t qui est dédoublé de manière à illustrer les échanges qui ont lieu entre les deux dispositifs.

La première partie du procédé de gestion de jeu qui va être décrit concerne le jeu proprement dit c'est à dire le fait de poser une question et la manière d'y répondre anonymement.

Lors de la première étape 50, une question est envoyée par le centre de gestion de jeu à tous les terminaux de jeu distants auxquels il est relié. Comme on l'a vu plus haut, cette question peut être posée lors d'un jeu télévisé (par exemple sous forme d'un message apparaissant sur l'écran en surimpression) ou bien sur un site Internet. La manière proprement dite dont la question est posée ne fait pas l'objet de la présente invention et ne sera pas décrite plus avant.

En pratique, la question posée est transmise du centre de gestion de jeu vers chaque terminal de jeu distant sous forme d'un message MQ qui est envoyé préférentiellement par la voie de communication mono-directionnelle 31 (Fig. 1) si elle existe et, dans le cas contraire, par la voie de communication bi-directionnelle 40 - 43 (Fig. 2). Ce message peut notamment être envoyé dans le flux du signal vidéo si le jeu a lieu dans le cadre d'une émission de télévision interactive.

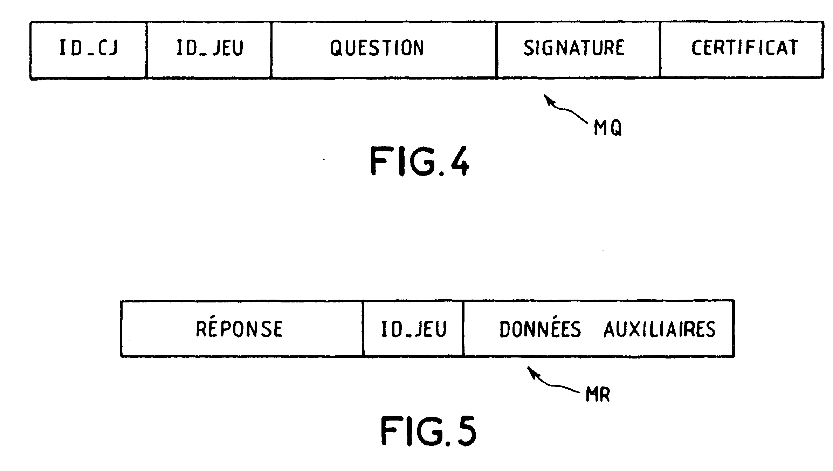

Le message MQ dont le contenu est représenté schématiquement à la figure 4, contient un numéro d'identification du jeu ID_JEU qui est différent pour chaque jeu (c'est à dire pour chaque nouvelle question posée) et qui identifie de manière unique la question posée. Ce numéro d'identification de jeu est transmis en même temps que la question elle-même ("QUESTION" - Fig. 4) dans le message MQ.

De manière optionnelle, le centre de gestion de jeu peut également envoyer dans le message des éléments d'authentification permettant aux terminaux de jeu distants de vérifier que la question posée provient d'un centre de gestion de jeu agréé par une autorité de certification et n'a pas été altérée durant la transmission.

Pour cela, le message MQ contient préférentiellement un numéro d'identification du centre de gestion de jeu ID_CJ, ce numéro étant différent pour chaque centre de gestion de jeu et étant attribué par une autorité de certification de manière unique à chaque centre de gestion de jeu. L'autorité de certification attribue également à chaque centre de gestion de jeu un certificat qui permet d'associer de manière sécurisée l'identifiant du centre de gestion de jeu ID_CJ et sa clé publique $K_{PUB\_CJ}$. En effet, un moyen bien connu de sécuriser la transmission d'information est d'utiliser des systèmes cryptographiques à clés publiques dans lesquels chaque intervenant possède une clé privée qui n'est connue que de lui et une clé publique qui est connue des autres intervenants. L'autorité de certification elle-même possède une clé privée avec laquelle elle signe les certificats et une clé publique, qui est contenue dans les terminaux de jeu distants comme on le verra plus loin pour leur permettre de vérifier la validité des certificats.

Dans la présente application, on utilisera préférentiellement un certificat établi selon la norme ITU-T, Recommandation X.509/ISO/IEC 9594-8 à laquelle on pourra se référer pour plus de détails.

Le certificat est transmis dans le message MQ ("CERTIFICAT" - Fig. 4) qui contient également une signature du message ("SIGNATURE") à l'aide de la clé privée $K_{PRI\_CJ}$ associée à la clé publique $K_{PUB\_CJ}$ du centre de gestion de jeu. La signature est par exemple définie comme suit :

$$\text{Sign}_{K_{PRI\_CJ}}(\text{ID\_CJ}\|\text{QUESTION}) \tag{1}$$

où "∥" représente l'opérateur de concaténation et "Sign" est une fonction mathématique connue, telle qu'une fonction de hachage, qui est telle qu'il existe une fonction correspondante "Vérif" vérifiant:

$$\text{Vérif}_{K_{PUB\_CJ}}\left(\text{Sign}_{K_{PRI\_CJ}}(M1), M2\right) = \text{vrai si } M1 = M2$$
$$\text{Vérif}_{K_{PUB\_CJ}}\left(\text{Sign}_{K_{PRI\_CJ}}(M1), M2\right) = \text{faux si } M1 \neq M2 \tag{2}$$

où M1, M2 sont des messages quelconques.

Ceci permet de vérifier qu'un message provient bien du centre de gestion de jeu et n'a pas été altéré pendant sa transmission.

L'étape suivante 51 du procédé consiste, pour le terminal de jeu distant 2, à vérifier l'authenticité du centre de gestion de jeu.

Pour cela, comme on l'a vu plus haut, chaque terminal de jeu distribué aux utilisateurs contient la clé publique de l'autorité de certification. Grâce à cette clé publique, le terminal de jeu vérifie le contenu du CERTIFICAT et récupère la clé publique $K_{PUB\_CJ}$ du centre de gestion de jeu. Il peut ainsi s'assurer que le numéro d'identification du centre de jeu ID_CJ contenu dans le message correspond bien à celui présent dans le certificat. A l'aide de cette clé publique $K_{PUB\_CJ}$ le terminal de jeu peut en outre vérifier que la SIGNATURE contenue dans le message MQ correspond bien au contenu du message en utilisant la fonction Vérif exposée ci-dessus.

A l'étape suivante 52, on suppose qu'un joueur utilisant le terminal de jeu distant 2 a proposé une réponse à la question contenue dans le message MQ et l'a saisi à l'aide de l'interface utilisateur du terminal de jeu. Le terminal de jeu construit alors un message MR, dont le contenu est illustré à la figure 5, et qui contient la réponse saisie par le joueur ("REPONSE"), le numéro d'identification de jeu ID_JEU ainsi que, préférentiellement, des DONNEES AUXILIAIRES de personnalisation (par exemple: le nom ou le prénom du joueur, son adresse, son numéro de téléphone, etc.).

Selon le principe de l'invention, ce message est ensuite masqué à l'aide d'un secret, lors de l'étape 53 pour garantir l'anonymat du joueur lorsqu'il envoie sa réponse.

Pour cela, selon un mode de réalisation préféré, le terminal de jeu distant génère un nombre aléatoire x. Ce nombre peut par exemple être issu d'un générateur pseudo-aléatoire comme cela est connu de l'homme du métier. Ce nombre doit rester secret et ne pas être communiqué à l'extérieur du terminal de jeu. Il servira ultérieurement à prouver que le joueur avait bien donné la bonne réponse s'il gagne le jeu.

Le terminal de jeu 2 utilise ensuite ce nombre aléatoire secret x pour créer un nombre public de masquage y, qui formera le secret utilisé pour masquer le message de réponse MR. Ce nombre public de masquage y doit être créé à partir du nombre secret x de telle manière qu'il soit impossible de retrouver x, connaissant y et la fonction utilisée pour former y à partir de x.

On utilise donc une fonction à sens unique f (plus connue sous le nom anglais de "one way function") pour calculer y à partir de x.

On utilisera préférentiellement comme fonction f une fonction basée sur un logarithme discret qui est notamment décrite dans la norme ISO 9796, partie 4 et qui est définie par la relation suivante (3) :

$$y = g^x \bmod p \qquad\qquad (3)$$

où p et g sont des valeurs connues, p étant un grand nombre premier (de 512 bits minimum), g étant un générateur de Z/pZ (Z étant l'ensemble des entiers relatifs) et "mod" étant la fonction modulo.

A l'aide de ce nombre de masquage public y, le terminal de jeu distant 2 effectue ensuite le calcul suivant (4) pour créer le message de réponse masqué W:

$$W = y \oplus MR \qquad\qquad (4)$$

où $\oplus$ représente la fonction "OU exclusif' (ou "XOR" en anglais).

D'autres calculs sont évidemment possibles pour masquer le message de réponse MR à l'aide du nombre y, notamment on pourra effectuer une multiplication des deux termes, modulo p.

Dans un deuxième mode de réalisation de l'invention, le masquage du message MR est effectué par un chiffrement à l'aide d'une clé secrète symétrique $K_y$ générée par le terminal de jeu distant, préférentiellement selon le standard DES (Data Encryption Standard).

Lors de l'étape suivante 54, le terminal de jeu distant 2 envoie le message de réponse masqué W au centre de gestion de jeu.

Conformément au but de l'invention, la réponse du joueur est sécurisée et anonyme puisqu'il est impossible, sans connaître y ou $K_y$, de retrouver la réponse du joueur à partir du simple message W.

Néanmoins, il est possible dans une variante de réalisation d'ajouter un niveau de sécurité supplémentaire en envoyant le message W sous une forme chiffrée à l'aide de la clé publique du centre de gestion de jeu $K_{PUB\_CJ}$ que le terminal a récupéré lors de l'étape 51.

Le centre de gestion de jeu reçoit le message W à un instant $T_W$. Il vérifie lors de l'étape suivante 55 que cet instant $T_W$ est bien antérieur à celui $T_D$ de la diffusion de la réponse à la question posée lors de l'étape 50. Ceci permet de garantir que le joueur n'a pas triché et n'a pas envoyé sa réponse après que la bonne réponse ait été diffusée par l'organisateur du jeu.

Le centre de gestion de jeu envoie ensuite au terminal de jeu, lors de l'étape 56, un accusé de réception R garantissant au joueur que sa réponse masquée a bien été enregistrée par l'organisateur du jeu. L'accusé de réception est, selon un mode de réalisation préféré, calculé comme suit :

$$R = \text{Sign}_{K_{PRI\_CJ}}(ID\_JEU\|W) \tag{5}$$

c'est à dire en calculant la signature numérique, à l'aide de la clé privée $K_{PRI\_CJ}$ associée à la clé publique $K_{PUB\_CJ}$ du centre de gestion de jeu, du message formé de la concaténation de l'identifiant de jeu ID_JEU et du message de réponse masquée W.

Enfin, la première partie du procédé de gestion du jeu se termine par la diffusion de la bonne réponse par le centre de gestion de jeu, à l'instant $T_D$ (étape 57). Préférentiellement, la diffusion de la réponse est effectuée via le réseau mono directionnel 31 (Fig. 1) dans le cas où il en existe un, notamment dans le cas d'un jeu télévisé interactif. S'il s'agit d'un jeu sur Internet, la réponse pourra être indiquée sur le site Internet de l'organisateur du jeu. La manière proprement dite de diffuser la réponse ne fait pas l'objet de la présente invention et ne sera pas décrite plus avant.

Parmi les étapes qui viennent d'être décrite, il est évident que les étapes 51 à 56 peuvent être effectuées pour chaque terminal de jeu distant auquel est relié le centre de gestion.

La deuxième partie du procédé de gestion de jeu concerne le cas où un joueur a donné la bonne réponse à la question posée et réclame son prix. On suppose que cette deuxième partie commence lorsque le joueur a vérifié que la réponse diffusée à l'étape 57 correspondait à la réponse qu'il avait donné lors de l'étape 52 et qu'il a lancé une instruction, grâce à l'interface utilisateur du terminal de jeu 2, pour réclamer son prix auprès de l'organisateur du jeu.

Le terminal de jeu 2 doit alors prouver au centre de gestion de jeu que le joueur avait bien donné la bonne réponse lorsqu'il a joué (aux étapes 52 à 54). Il doit également prouver qu'il connaît le secret ayant servi à masquer la réponse. Ceci permet de garantir que seul le gagnant authentique puisse recevoir un prix.

Pour cela, le terminal de jeu 2 va utiliser l'accusé de réception R qui a été envoyé par le centre de gestion de jeu à l'étape 56 comme preuve de l'enregistrement de la réponse du joueur auprès de l'organisateur du jeu.

Lors d'une première étape 58, le terminal de jeu distant 2 vérifie tout d'abord la validité de l'accusé de réception R à l'aide de la clé publique $K_{PUB\_CJ}$ du centre de gestion de jeu en utilisant par exemple la fonction Vérif exposée plus haut.

Lorsque la vérification est positive ce qui prouve que l'accusé de réception R n'a pas été altéré par un tiers, le terminal de jeu envoie (étape 59) au centre de gestion de jeu un message MP prouvant que le joueur avait donné la bonne réponse et que celle-ci émanait bien de lui.

Lorsque le message de réponse MR a été masqué à l'étape 53 selon le premier mode de réalisation, préféré, de l'invention, le message MP contient l'accusé de réception R ainsi que le nombre y ayant servi à masquer le message MR pour former le message W. L'accusé de réception permet de prouver que le terminal de jeu avait bien envoyé la réponse masquée W à l'étape 54.

Pour prouver que le message de réponse masqué W émanait bien du terminal de jeu distant 2, il faut aussi prouver que ce damier connaissait le nombre secret x ayant servi à calculer y. Toujours dans ce premier mode de réalisation, selon une première variante, le message MP contient donc en outre le nombre aléatoire secret x.

Dans une deuxième variante du premier mode de réalisation, le message MP contient l'accusé de réception R, le nombre de masquage public y mais il ne contient pas le nombre secret x. Dans cette variante de réalisation préférée, on utilise un protocole zéro-connaissance pour prouver au centre de gestion de jeu que le terminal de jeu distant 2 connaissait le nombre secret x sans révéler directement ce nombre x.

Lorsqu'on a utilisé la fonction à sens unique définie par la relation (3) ci-dessus pour calculer y à partir de x, on utilisera de préférence le protocole d'authentification de Schnorr pour prouver la connaissance de x sans transmettre directement x. Ce protocole se déroule comme suit:

1. le terminal de jeu distant 2 génère un nombre aléatoire $r_1$ à partir duquel il calcule un nombre $z_1$ selon la relation (6) ci-dessous et il envoie ce nombre $z_1$ dans le message MP;

$$z_1 = g^{r_1} \bmod p \tag{6}$$

2. le centre de gestion de jeu envoie en réponse au terminal de jeu 2 un nombre binaire $b_1$ (égal à 0 ou 1);
3. le terminal de jeu 2 calcule la valeur $u_1$ selon la relation (7) ci-dessous et il l'envoie au centre de gestion de jeu;

$$u_1 = r_1 - b_1 \times x \tag{7}$$

4. le centre de gestion de jeu vérifie que la relation (8) ci-dessous est vraie:

$$g^{u_1} = y^{b_1} \times z_1 \qquad (8)$$

Ces étapes 1 à 4. doivent être répétées plusieurs fois avec des nombre $r_j$, $z_j$, $b_j$ et $u_j$ différents pour convaincre le centre de gestion de jeu que le terminal de jeu 2 connaît x.

Lorsque le message de réponse MR a été masqué à l'étape 53 selon le deuxième mode de réalisation de l'invention, le message MP envoyé à l'étape 59 contient l'accusé de réception R ainsi que la clé secrète $K_y$. L'accusé de réception permet de prouver que le terminal de jeu avait bien envoyé la réponse masquée W à l'étape 54 et la clé $K_y$ permet de prouver que le terminal connaît le secret ayant servi à masquer le message de réponse.

Avantageusement, de manière à améliorer encore la sécurité des échanges, tous les messages échangés entre le centre de gestion de jeu et le terminal de jeu distant 2 sont chiffrés. Ainsi, le message MP envoyé dans la première variante du premier mode de réalisation (ou dans le deuxième mode de réalisation) est transmis sous une forme chiffrée à l'aide de la clé publique $K_{PUB\_CJ}$ du centre de gestion de jeu. Dans la seconde variante du premier mode de réalisation, les messages envoyés du terminal de jeu 2 vers le centre de gestion de jeu (message MP, et envoie du nombre $u_j$) sont chiffrés à l'aide de la clé publique $K_{PUB\_CJ}$ tandis que les messages envoyés du centre de gestion de jeu vers le terminal distant sont chiffrés à l'aide de la clé privée $K_{PRI\_CJ}$ du centre de gestion de jeu.

A l'étape 60, le centre de gestion de jeu vérifie l'authenticité du gagnant, c'est à dire qu'il vérifie, au vu du seul message MP dans la première variante du premier mode de réalisation (ou dans le deuxième mode de réalisation), ou bien au vu des messages échangés selon le protocole d'authentification de Schnorr dans la seconde variante du premier mode de réalisation, que la réponse du joueur était la bonne et qu'elle émanait bien de lui.

Dans le cas où la vérification est positive, un certificat de gain du prix est envoyé au terminal de jeu distant 2 à l'étape 61 pour permettre au joueur de recevoir son prix sur présentation de ce certificat.

Tout moyen approprié pourra être mis en oeuvre pour remettre le prix au gagnant.

**Revendications**

1. Procédé de gestion de jeu à distance sécurisé entre un centre de gestion de jeu (1, 101) et au moins un terminal de jeu distant (21-23; 121-123; 2), **caractérisé en ce qu'**il comporte les étapes consistant pour le terminal de jeu distant :

   a) à recevoir dudit centre de gestion de jeu (1, 101) un message (MQ) contenant un identifiant de jeu (ID_JEU) ainsi qu'une question ;
   b) à construire un message de réponse (MR) contenant l'identifiant de jeu (ID_JEU) et la réponse d'un joueur utilisant ledit terminal de jeu ;
   c) à masquer le message de réponse (MR) avec un secret (y, $K_y$) connu seulement du terminal de jeu ;
   d) à transmettre le message de réponse masqué (W) au centre de gestion de jeu ; et
   e) à recevoir dudit centre de gestion de jeu (1, 101) un accusé de réception (R) lorsque la réponse du joueur envoyée à l'étape d) a été prise en compte par le centre de gestion de jeu.

2. Procédé selon la revendication 1, **caractérisé en ce que** l'étape c) consiste:

   - à générer un nombre aléatoire secret (x) ;
   - à appliquer à ce nombre secret (x) une fonction à sens unique (f) pour générer un nombre de masquage public (y) ; et
   - à utiliser ledit nombre de masquage public (y) pour masquer le message de réponse (MR).

3. Procédé selon la revendication 2, **caractérisé en ce que** la fonction à sens unique (f) est une fonction basée sur un logarithme discret définie par la relation suivante:

$$y = g^x \bmod p$$

   où p et g sont des valeurs connues, p étant un nombre premier de 512 bits minimum, g étant un générateur de Z/pZ, Z étant l'ensemble des entiers relatifs et mod étant la fonction modulo.

4. Procédé selon la revendication 1, **caractérisé en ce que** l'étape c) consiste à chiffrer le message de réponse

(MR) à l'aide d'une clé secrète symétrique ($K_y$) générée par ledit terminal de jeu distant.

5.  Procédé selon l'une des revendications précédentes, **caractérisé en ce que** le premier message (MQ) reçu lors de l'étape a) comprend en outre :

    -   un identifiant du centre de gestion de jeu (ID_CJ) ;
    -   un certificat, délivré par une autorité de certification au centre de gestion de jeu, déchiffrable à l'aide d'une clé publique de l'autorité de certification, fournissant la clé publique du centre de gestion de jeu correspondant à l'identifiant dudit centre de gestion de jeu (ID_CJ); et
    -   une signature d'une partie ou de la totalité dudit message à l'aide de la clé privée associée à la clé publique du centre de gestion de jeu.

6.  Procédé selon la revendication 5, dans lequel ledit terminal de jeu distant contient la clé publique de l'autorité de certification, **caractérisé en ce que**, lors de l'étape b), le terminal de jeu distant procède, avant de construire le message de réponse (MR), à la vérification de l'authenticité du centre de gestion de jeu à l'aide du certificat délivré par l'autorité de certification.

7.  Procédé selon l'une des revendications précédentes, **caractérisé en ce que** le message de réponse (MR) construit à l'étape b) contient en outre des données auxiliaires de personnalisation.

8.  Procédé selon l'une des revendications 5 à 7, **caractérisé en ce que** le message de réponse masqué (W) est transmis à l'étape d) sous une forme chiffrée à l'aide de la clé publique du centre de gestion de jeu.

9.  Procédé selon l'une des revendications 5 à 8, **caractérisé en ce que** l'accusé de réception (R) reçu lors de l'étape e) comporte une signature, à l'aide de la clé privée associée à la clé publique du centre de gestion de jeu, d'un message formé de la concaténation de l'identifiant de jeu (ID_JEU) et du message de réponse masqué (W).

10. Procédé selon l'une des revendications précédentes comportant une étape supplémentaire de réclamation du prix gagné par un joueur lorsque la réponse du joueur envoyée lors de l'étape d) est la bonne réponse à la question contenue dans le message (MQ) reçu à l'étape a), ladite étape supplémentaire consistant pour le terminal de jeu distant (2) utilisé par le joueur gagnant,:

    f) à envoyer au centre de gestion de jeu un message de réclamation du prix (MP) contenant au moins :

    -   l'accusé de réception (R) reçu du centre de gestion de jeu à l'étape e) ; et
    -   une information prouvant que ledit terminal de jeu est en possession du secret utilisé pour masquer le message de réponse (MR) à l'étape c).

11. Procédé selon la revendication 10, prise dans sa dépendance des revendications 2, 3 et 5 à 9, **caractérisé en ce que** l'information transmise à l'étape f) par le terminal de jeu distant (2) au centre de gestion de jeu pour prouver que ledit terminal est en possession du secret comporte:

    -   le nombre de masquage public y et
    -   le nombre aléatoire secret (x) générés à l'étape c).

12. Procédé selon la revendication 10, prise dans sa dépendance des revendications 2, 3 et 5 à 9, **caractérisé en ce que** l'information transmise à l'étape f) par le terminal de jeu distant (2) au centre de gestion de jeu pour prouver que ledit terminal est en possession du secret comporte:

    -   le nombre de masquage public y et
    -   un moyen de prouver, via un protocole zéro-connaissance, que le terminal est en outre en possession du nombre aléatoire secret (x) utilisé pour générer ledit nombre de masquage public (y).

13. Procédé selon la revendication 12, prise dans sa dépendance des revendications 3 et 5 à 9, **caractérisé en ce que** le protocole zéro connaissance utilisé est le protocole d'authentification de Schnorr.

14. Procédé selon la revendication 10, prise dans sa dépendance des revendications 4 à 9, **caractérisé en ce que** l'information transmise à l'étape f) par le terminal de jeu distant (2) au centre de gestion de jeu pour prouver que ledit terminal est en possession du secret comporte la clé secrète symétrique ($K_y$).

**15.** Procédé selon l'une des revendications 10 à 14, **caractérisé en ce que**, lors de l'étape f), le terminal de jeu distant (2) procède, avant d'envoyer le message de réclamation du prix (MP), à la vérification de la validité de l'accusé de réception (R) reçu du centre de gestion de jeu lors de l'étape e).

**16.** Procédé selon l'une des revendications 10 à 15, prises dans leur dépendance de la revendication 5, **caractérisé en ce que** tout message envoyés par le terminal de jeu distant au centre de gestion de jeu au cours de l'étape f) est transmis sous une forme chiffrée à l'aide de la clé publique du centre de gestion de jeu.

**17.** Procédé selon l'une des revendications 12 ou 13, **caractérisé en ce que** les messages reçus du centre de gestion de jeu par ledit terminal de jeu distant dans le cadre du protocole zéro-connaissance sont transmis sous une forme chiffrée à l'aide de la clé privée associée à la clé publique du centre de gestion de jeu.

**18.** Procédé de gestion de jeu à distance sécurisé entre un centre de gestion de jeu (1, 101) et au moins un terminal de jeu distant (21-23; 121-123; 2), **caractérisé en ce qu'**il comporte les étapes consistant pour le centre de gestion de jeu :

i) à envoyer audit terminal de jeu distant (21-23; 121-123; 2) un message (MQ) contenant un identifiant de jeu (ID_JEU) ainsi qu'une question ;
j) à recevoir dudit terminal de jeu distant (21-23; 121-123; 2) la réponse d'un joueur dans un message de réponse (MR) masqué (W) avec un secret (y, $K_y$) connu seulement du terminal de jeu distant ;
k) à vérifier que le message de réponse masqué (W) est reçu à un instant ($T_W$) antérieur à celui ($T_D$) de la diffusion de la réponse à la question posée à l'étape i) ;
l) en cas de vérification positive à l'étape k), à envoyer un accusé de réception (R) audit terminal de jeu distant ; et
m) à diffuser la réponse à la question posée à l'étape i) audit terminal de jeu distant.

**19.** Procédé selon la revendication 18 comportant des étapes supplémentaires de remise du prix à un joueur gagnant consistant pour le centre de gestion de jeu:

n) à recevoir d'un terminal de jeu distant utilisé par le joueur gagnant un message de réclamation du prix (MP) contenant au moins :

- l'accusé de réception (R) envoyé à l'étape I) ; et
- une information prouvant que ledit terminal de jeu distant est en possession du secret utilisé pour masquer le message de réponse reçu à l'étape j);

o) à vérifier la validité de la réponse reçue dans ledit message de réclamation du prix ; et
p) en cas de vérification positive à l'étape o), à mettre en oeuvre des moyens pour remettre le prix au joueur gagnant

**20.** Terminal de jeu distant pour la mise en oeuvre du procédé selon l'une des revendications 1 à 9, **caractérisé en ce qu'**il est capable de mettre en oeuvre les étapes a) à e).

**21.** Terminal selon la revendication 20, **caractérisé en ce qu'**il est en outre capable de mettre en oeuvre l'étape f) définie aux revendications 10 à 17.

**22.** Centre de gestion de jeu pour la mise en oeuvre du procédé selon la revendication 18, **caractérisé en ce qu'**il est capable de mettre en oeuvre les étapes i) à m).

**23.** Centre de gestion de jeu selon la revendication 22, **caractérisé en ce qu'**il est en outre capable de mettre en oeuvre les étapes n) à p) définies dans la revendication 19.

**Patentansprüche**

**1.** Gesichertes Fernspielverwaltungsverfahren zwischen einem Spielverwaltungszentrum (1, 101) und wenigstens einem Fernspielterminal (21-23; 121-123; 2),
**gekennzeichnet durch** folgende Schritte für das Fernspielterminal:

    a) Empfang einer Nachricht (MQ) mit einem Spielidentifizierer (ID_JEU) sowie einer Frage von dem Spielverwaltungszentrum (1, 101),
    b) Bildung einer Antwortnachricht (MR) mit dem Spielidentifizierer (ID_JEU) und der Antwort eines Spielers unter Anwendung des Spielterminals,
    c) Verdecken der Antwortnachricht (MR) mit einem Geheimcode ($y, K_y$), der nur dem Spielterminal bekannt ist,
    d) Übertragung der verdeckten Antwortnachricht (VV) zu dem Spielverwaltungszentrum und
    e) Empfang einer Empfangsbestätigung (R) von dem Spielverwaltungszentrum (1, 101), wenn die im Schritt d) gesendete Antwort des Spielers **durch** das Spielverwaltungszentrum berücksichtigt wurde.

2. Verfahren nach Anspruch 1, **dadurch gekennzeichnet, dass** der Schritt c) folgende Schritte enthält:

    - Erzeugung einer geheimen Zufallszahl (x),
    - Anwendung einer Einwegfunktion (f) auf diese Geheimcodezahl (x) zur Erzeugung einer öffentlichen Verdeckungszahl (y) und
    - Anwendung der öffentlichen Verdeckungszahl (y) zur Verdeckung der Antwortnachricht (MR).

3. Verfahren nach Anspruch 2, **dadurch gekennzeichnet, dass** die Einwegfunktion (f) eine Funktion aufgrund eines diskreten Logarithmus ist, der durch folgende Gleichung definiert ist:

$$y = g^x \bmod p$$

wobei p und g bekannte Werte sind, p eine Primzahl mit einem Minimum von 512 Bit, g ein Generator von Z/pZ, Z die Menge der ganzen Zahlen und mod die Modulo-Funktion ist.

4. Verfahren nach Anspruch 1, **dadurch gekennzeichnet, dass** der Schritt c) in einer Verschlüsselung der Antwortnachricht (MR) mit Hilfe eines symmetrischen Geheimschlüssels ($K_y$) besteht, der durch das Fernspielterminal erzeugt wird.

5. Verfahren nach einem der vorangehenden Ansprüche, **dadurch gekennzeichnet, dass** die während des Schritts a) empfangene erste Nachricht (MQ) außerdem folgendes enthält:

    - einen Identifizierer des Fernspielverwaltungszentrums (ID_CJ),
    - ein Zertifikat, das durch eine Zertifikationsbehörde zu dem Spielverwaltungszentrum geliefert wird, das mittels eines öffentlichen Schlüssels der Zertifikationsbehörde entschlüsselbar ist, und der öffentliche Schlüssel des Spielverwaltungszentrum entsprechend dem Identifizierer des Spielverwaltungszentrums (ID_CJ) geliefert wird, und
    - eine Signatur eines Teils oder Gesamtheit der Nachricht mittels des privaten Schlüssels für das Spielverwaltungszentrum für die privaten Schlüssel.

6. Verfahren nach Anspruch 5, in dem das Fernspielterminal den öffentlichen Schlüssel der Zertifikationsbehörde enthält, **dadurch gekennzeichnet, dass** während des Schritts b) das Fernspielterminal vor der Bildung der Antwortnachricht (MR) die Verifikation der Behörde des Spielverwaltungszentrums mittels des durch die Zertifikationsbehörde gelieferten Zertifikats durchführt.

7. Verfahren nach einem der vorangehenden Ansprüche, **dadurch gekennzeichnet, dass** die im Schritt b) gebildete Antwortnachricht (MR) außerdem zusätzliche kundenspezifische Daten enthält.

8. Verfahren nach einem der Ansprüche 5 bis 7, **dadurch gekennzeichnet, dass** die verdeckte Antwortnachricht (W) im Schritt d) in einer Form übertragen wird, die mittels des öffentlichen Schlüssels des Spielverwaltungszentrums verschlüsselt ist.

9. Verfahren nach einem der Ansprüche 5 bis 8, **dadurch gekennzeichnet, dass** die während des Schritts e) empfangene Empfangsquittierung (R) eine Signatur enthält, mittels des privaten Schlüssels mit dem öffentlichen Schlüssel des Spielverwaltungszentrums, einer Nachricht, die aus der Verkettung des Spielidentifizierers (ID_JEU) und der verdeckten Antwortnachricht (W) gebildet wird.

**10.** Verfahren nach einem der vorangehenden Ansprüche mit dem zusätzlichen Schritt der Beanspruchung des von einem Spieler gewonnenen Preises, wenn die während des Schritts d) gesendete Antwort des Spielers die richtige Antwort auf die Frage ist, die in der im Schritt a) empfangenen Nachricht (MQ) enthalten ist, dass der zusätzliche Schritt für das Fernspielterminal (2) durch den gewinnenden Spieler benutzt wird:

f) Senden einer Beanspruchungsnachricht für den Preis (MP) zu dem Spielverwaltungszentrum, die wenigstens folgendes enthält:

- Quittierung des von dem Spielverwaltungszentrum im Schritt e) empfangenen Empfangs (R) und
- eine Information, die beweist, dass das Spielterminal sich im Besitz des Geheimcodes befindet, der zur Verdeckung der Antwortnachricht (MR) im Schritt c) benutzt wird.

**11.** Verfahren nach Anspruch 10, in Abhängigkeit von den Ansprüchen 2, 3 und 5 bis 9, **dadurch gekennzeichnet, dass** die im Schritt f) zu dem Spielverwaltungszentrum übertragene Information durch das Fernspielterminal (2) zum Beweis, dass dieses Terminal im Besitz des Geheimcodes ist, folgendes enthält:

- die öffentliche Verdeckungszahl y und
- die Geheimzufallszahl (x),

die im Schritt c) erzeugt wurden.

**12.** Verfahren nach Anspruch 10, in Abhängigkeit von den Ansprüchen 2, 3 und 5 bis 9, **dadurch gekennzeichnet, dass** die im Schritt f) durch das Fernspielterminal (2) zu dem Spielverwaltungszentrum übertragene Information, zum Beweis, dass das Terminal sich im Besitz des Geheimcodes befindet, folgendes enthält:

- die öffentliche Verdeckungszahl y und
- Mittel zum Nachweis über ein Nullkenntnisprotokoll, dass sich das Terminal außerdem im Besitz der Geheimzufallszahl (x) befindet, die zur Erzeugung der öffentlichen Verdeckungszahl (y) benutzt wird.

**13.** Verfahren nach Anspruch 12, abhängig von den Ansprüchen 3 und 5 bis 9,
**dadurch gekennzeichnet, dass** das benutzte Nullkenntnisprotokoll das Berechtigungsprotokoll von Schnorr ist.

**14.** Verfahren nach Anspruch 10, abhängig von den Ansprüchen 4 bis 9, **dadurch gekennzeichnet, dass** die im Schritt f) durch das Fernspielterminal (2) zu dem Spielverwaltungszentrum übertragene Information zum Nachweis, dass das Terminal sich im Besitz des Geheimcodes befindet, den symmetrischen Geheimschlüssel ($K_y$) enthält.

**15.** Verfahren nach einem der Ansprüche 10 bis 14, **dadurch gekennzeichnet, dass** während des Schritts f) das Fernspielterminal (2) vor dem Senden der den Preis beanspruchenden Nachricht (MP) die Verifikation der Gültigkeit der Empfangsbestätigung (R) sendet, die während des Schritts e) von dem Spielverwaltungszentrum empfangen wird.

**16.** Verfahren nach einem der Ansprüche 10 bis 15, abhängig vom Anspruch 5, **dadurch gekennzeichnet, dass** jede im Laufe des Schritts f) durch das Fernspielterminal zu dem Spielverwaltungszentrum gesendete Nachricht mittels des öffentlichen Schlüssels des Spielverwaltungszentrums verschlüsselt übertragen wird.

**17.** Verfahren nach einem der Ansprüche 12 oder 13, **dadurch gekennzeichnet, dass** die Nachrichten, die von dem Spielverwaltungszentrum durch das Fernspielterminal im Rahmen des Nullkenntnisprotokolls empfangen werden, mittels des privaten Schlüssels für den öffentlichen Schlüssel des Spielverwaltungszentrums in verschlüsselter Form übertragen werden.

**18.** Verfahren zur Verwaltung eines gesicherten Fernspiels zwischen einem Spielverwaltungszentrum (1, 101) und wenigstens einem Fernspielterminal (21-23; 121-123; 2), **dadurch gekennzeichnet, dass** es die folgenden Schritte für das Fernspielspielterminal enthält:

i) Senden einer Nachricht (MQ) mit einem Spielidentifizierer (ID_JEU) sowie einer Frage zu dem Fernspielterminal (21-23; 121-123; 2),

j) Empfangen der Antwort eines Spielers in einer Antwortnachricht (MR) von dem Fernspielterminal (21-23; 121-123; 2), die mit einem nur dem Fernspielterminal bekannten Geheimcode (y, $K_y$) verdeckt ist,

k) Prüfung, ob die verdeckte Antwortnachricht (W) bei einem Zeitpunkt empfangen wird, der vor demjenigen ($T_D$) der Sendung der Antwort zu der im Schritt i) gestellten Frage empfangen wird,

l) im Falle einer positiven Prüfung im Schritt k) Senden einer Empfangsbestätigung (R) zu dem Fernspielterminal und

m) Senden der Antwort auf die im Schritt i) gestellte Frage zu dem Fernspielterminal.

**19.** Verfahren nach Anspruch 18 mit den zusätzlichen Schritten der Übermittlung des Preises zu einem gewinnenden Spieler, der zu dem Spielverwaltungszentrum gehört:

n) Empfang einer Nachricht für die Beanspruchung des Preises (MP) von einem durch den gewinnenden Spieler benutzen Fernspielterminal, enthaltend wenigstens folgendes:

- die im Schritt I) gesendete Empfangsbestätigung (R) und
- eine Information, die nachweist, dass das Fernspielterminal im Besitz des Geheimschlüssels ist, der zur Verdeckung der in dem Schritt j) empfangenen Antwortnachricht dient,

o) Prüfung der Gültigkeit der Nachricht, die in der den Preis beanspruchenden Nachricht empfangen wird, und

p) im Falle einer positiven Prüfung im Schritt o) Durchführungsmittel für die Übertragung des Preises zu dem gewinnenden Spieler.

**20.** Fernspielterminal zur Durchführung des Verfahrens gemäß einem der Ansprüche 1 bis 9, **dadurch gekennzeichnet, dass** es wenigstens einen der Schritte a) bis e) durchführen kann.

**21.** Fernspielterminal nach Anspruch 20, **dadurch gekennzeichnet, dass** es außerdem den in den Ansprüchen 10 bis 17 angegebenen Schritt f) durchführen kann.

**22.** Spielverwaltungszentrum für die Durchführung des Verfahrens nach Anspruch 18, **dadurch gekennzeichnet, dass** es die Schritte i) bis m) durchführen kann.

**23.** Spielverwaltungszentrum nach Anspruch 22, **dadurch gekennzeichnet, dass** es außerdem die im Anspruch 19 angegebenen Schritte n) bis p) durchführen kann.

**Claims**

**1.** A secure method of remote game management between a game management center (1, 101) and at least one remote game terminal (21-23; 121-123; 2), **characterized in that** it comprises the steps consisting in respect of the remote game terminal:

a) in receiving from said game management center (1, 101) a message (MQ) containing a game identifier (ID_GAME) as well as a question;

b) in constructing a response message (MR) containing the game identifier (ID_GAME) and the response of a player using said game terminal;

c) in blinding the response message (MR) with a secret (y, $K_y$) known only to the game terminal;

d) in transmitting the blinded response message (W) to the game management center; and

e) in receiving from said game management center (1, 101) an acknowledgement of receipt (R) when the player's response sent in step d) has been taken into account by the game management center.

**2.** The method as claimed in claim 1, **characterized in that** step c) consists:

- in generating a secret random number (x);
- in applying a one-way function (f) to this secret number (x) so as to generate a public blinding number (y); and
- in using said public blinding number (y) to blind the response message (MR).

**3.** The method as claimed in claim 2, **characterized in that** the one-way function (f) is a function based on a discrete logarithm defined by the following relation:

$$y = g^x \bmod p$$

where p and g are known values, p being a prime number with a minimum of 512 bits, g being a generator of Z/pZ, Z being the set of rational integers and mod being the modulo function.

**4.** The method as claimed in claim 1, **characterized in that** step c) consists in enciphering the response message (MR) with the aid of a symmetric secret key ($K_y$) generated by said remote game terminal.

**5.** The method as claimed in one of the preceding claims, **characterized in that** the first message (MQ) received during step a) furthermore comprises:

- an identifier of the game management center (ID_CJ);
- a certificate, delivered by a certification authority to the game management center, decipherable with the aid of a public key of the certification authority, yielding the public key of the game management center corresponding to the identifier of said game management center (ID_CJ); and
- a signature of part or of the whole of said message with the aid of the private key associated with the public key of the game management center.

**6.** The method as claimed in claim 5, in which said remote game terminal contains the public key of the certification authority, **characterized in that**, during step b), the remote game terminal undertakes, before constructing the response message (MR), the verification of the authenticity of the game management center with the aid of the certificate delivered by the certification authority.

**7.** The method as claimed in one of the preceding claims, **characterized in that** the response message (MR) constructed in step b) furthermore contains auxiliary customization data.

**8.** The method as claimed in one of claims 5 to 7, **characterized in that** the blinded response message (W) is transmitted in step d) in a form enciphered with the aid of the public key of the game management center.

**9.** The method as claimed in one of claims 5 to 8, **characterized in that** the acknowledgement of receipt (R) received during step e) comprises a signature, with the aid of the private key associated with the public key of the game management center, of a message formed of the concatenation of the game identifier (ID_GAME) and of the blinded response message (W).

**10.** The method as claimed in one of the preceding claims comprising an additional step of claiming the prize won by a player when the player's response sent during step d) is the right answer to the question contained in the message (MQ) received in step a), said additional step consisting in respect of the remote game terminal (2) used by the winning player:

f) in sending the game management center a message claiming the prize (MP) containing at least:

- the acknowledgement of receipt (R) received from the game management center in step e); and
- an item proving that said game terminal is in possession of the secret used to blind the response message (MR) in step c).

**11.** The method as claimed in claim 10, taken in its dependence on claims 2, 3 and 5 to 9, **characterized in that** the item transmitted in step f) by the remote game terminal (2) to the game management center to prove that said terminal is in possession of the secret comprises:

- the public blinding number y and
- the secret random number (x)
  which were generated in step c).

**12.** The method as claimed in claim 10, taken in its dependence on claims 2, 3 and 5 to 9, **characterized in that** the item transmitted in step f) by the remote game terminal (2) to the game management center to prove that said terminal is in possession of the secret comprises:

- the public blinding number y and
- a means of proving, via a zero-knowledge protocol, that the terminal is moreover in possession of the secret random number (x) used to generate said public blinding number (y).

13. The method as claimed in claim 12, taken in its dependence on claims 3 and 5 to 9, **characterized in that** the zero-knowledge protocol used is the Schnorr authentication protocol.

14. The method as claimed in claim 10, taken in its dependence on claims 4 to 9, **characterized in that** the item transmitted in step f) by the remote game terminal (2) to the game management center to prove that said terminal is in possession of the secret comprises the symmetric secret key ($K_y$).

15. The method as claimed in one of claims 10 to 14, **characterized in that**, during step f), the remote game terminal (2) undertakes, before sending the message claiming the prize (MP), the verification of the validity of the acknowledgement of receipt (R) received from the game management center during step e).

16. The method as claimed in one of claims 10 to 15, taken in their dependence on claim 5, **characterized in that** any message sent by the remote game terminal to the game management center in the course of step f) is transmitted in a form enciphered with the aid of the public key of the game management center.

17. The method as claimed in either of claim 12 or 13, **characterized in that** the messages received from the game management center by said remote game terminal within the framework of the zero-knowledge protocol are transmitted in a form enciphered with the aid of the private key associated with the public key of the game management center.

18. A secure method of remote game management between a game management center (1, 101) and at least one remote game terminal (21-23; 121-123; 2), **characterized in that** it comprises the steps consisting in respect of the remote game terminal:

   i) in sending the remote game terminal (21-23; 121-123; 2) a message (MQ) containing a game identifier (ID_GAME) as well as a question;
   j) in receiving from said remote game terminal (21-23; 121-123; 2) the response of a player in a response message (MR) blinded (W) with a secret (y, $K_y$) known only to the remote game terminal;
   k) in verifying that the blinded response message (W) is received at an instant ($T_W$) prior to that ($T_D$) of the broadcasting of the response to the question posed in step i);
   l) in case of positive verification in step k), in sending an acknowledgement of receipt (R) to said remote game terminal; and
   m) in broadcasting the response to the question posed in step i) to said remote game terminal.

19. The method as claimed in claim 18, comprising additional steps of dispatching the prize to a winning player consisting in respect of the game management center:

   n) in receiving from a remote game terminal used by the winning player a message claiming the prize (MP) containing at least:

   - the acknowledgement of receipt (R) sent in step l); and
   - an item proving that said remote game terminal is in possession of the secret used to blind the response message received in step j);

   o) in verifying the validity of the response received in said message claiming the prize; and
   p) in case of positive verification in step o), in implementing means for dispatching the prize to the winning player.

20. A remote game terminal for the implementation of the method as claimed in one of claims 1 to 9, **characterized in that** it is capable of implementing steps a) to e).

21. The terminal as claimed in claim 20, **characterized in that** it is furthermore capable of implementing step f) defined in claims 10 to 17.

**22.** A game management center for the implementation of the method as claimed in claim 18, **characterized in that** it is capable of implementing steps i) to m).

**23.** The game management center as claimed in claim 22, **characterized in that** it is furthermore capable of implementing steps m) to p) defined in claim 19.

FIG.1

FIG.2

FIG.3

| ID_CJ | ID_JEU | QUESTION | SIGNATURE | CERTIFICAT |
|-------|--------|----------|-----------|------------|

MQ

# FIG.4

EP 1 244 992 B1

| RÉPONSE | ID_JEU | DONNÉES AUXILIAIRES |
|---------|--------|---------------------|

MR

# FIG.5